(19) Europäisches Patentamt
European Patent Office
Office européen des brevets

(11) EP 4 723 316 A2

(12) **EUROPEAN PATENT APPLICATION**

(43) Date of publication:
08.04.2026 Bulletin 2026/15

(51) International Patent Classification (IPC):
H01M 50/107 (2021.01)   H01M 50/593 (2021.01)
H01M 50/152 (2021.01)   H01M 50/213 (2021.01)

(21) Application number: 25226796.8

(52) Cooperative Patent Classification (CPC):
H01M 50/107; H01M 50/152; H01M 50/167;
H01M 50/184; H01M 50/188; H01M 50/213;
H01M 50/528; H01M 50/533; H01M 50/593

(22) Date of filing: 23.12.2025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 23.12.2024   CN 202411906787

(71) Applicant: Xiamen Ampace Technology Limited
Xiamen City, Fujian Province 361000 (CN)

(72) Inventors:
• DENG, Shaoxian
Xiamen City, Fujian Province, 361000 (CN)
• SUN, Chuan
Xiamen City, Fujian Province, 361000 (CN)
• QIU, Shenzhao
Xiamen City, Fujian Province, 361000 (CN)
• HE, Ping
Xiamen City, Fujian Province, 361000 (CN)

(74) Representative: Kraus & Lederer PartGmbB
Thomas-Wimmer-Ring 15
80539 München (DE)

(54) **CYLINDRICAL BATTERY, BATTERY MODULE, AND ELECTRIC DEVICE**

(57)    A cylindrical battery includes a housing, an electrode assembly, an end cover assembly, and an insulating member. The housing includes a bottom wall and a sidewall, where the sidewall includes a sidewall body and a first protrusion, the sidewall body is connected to the bottom wall, and the first protrusion protrudes from an inner surface of the sidewall body. In the axial direction, at least a portion of the first protrusion is located between the electrode assembly and the end cover assembly. The insulating member includes a first insulating portion and a second insulating portion, where a thickness of the first insulating portion is greater than a thickness of the second insulating portion. In a radial direction of the cylindrical battery, at least a portion of the first insulating portion is located at an inner side of the first protrusion. In the axial direction, at least a portion of the first insulating portion is located between the electrode assembly and the end cover assembly, and at least a portion of the second insulating portion is located between the electrode assembly and the first protrusion.

FIG. 3

Description

TECHNICAL FIELD

This application relates to the field of battery technology, in particular, to a cylindrical battery, a battery module, and an electric device.

BACKGROUND

With the rapid development of the battery industry, batteries have become increasingly prevalent in applications in the fields such as electric vehicles, electric bicycles, and electric tools. Cylindrical batteries, due to their excellent grouping properties and high stability, are particularly favored and are gradually applied in various complex scenarios.
As cylindrical batteries need to be applied in various scenarios and operating conditions, how to improve their safety performance has been a continuous focus of research in the industry.

SUMMARY

This application provides a cylindrical battery, a battery module, and an electric device, which are conducive to reducing movement of the electrode assembly and improving the vibration resistance of the cylindrical battery.
According to a first aspect, this application provides a cylindrical battery including an electrode assembly, a housing, an end cover assembly, and an insulating member. The housing includes a bottom wall and a sidewall, where the sidewall includes a sidewall body and a first protrusion, the sidewall body is connected to the bottom wall, and the first protrusion protrudes from an inner surface of the sidewall body. The electrode assembly is accommodated within the housing. The bottom wall and the end cover assembly are arranged in an axial direction of the cylindrical battery, and the end cover assembly is connected to the sidewall in an insulated manner. In the axial direction, at least a portion of the first protrusion is located between the electrode assembly and the end cover assembly. The insulating member includes a first insulating portion and a second insulating portion, where a thickness of the first insulating portion is greater than a thickness of the second insulating portion. In a radial direction of the cylindrical battery, at least a portion of the first insulating portion is located at an inner side of the first protrusion. In the axial direction, at least a portion of the first insulating portion is located between the electrode assembly and the end cover assembly, and at least a portion of the second insulating portion is located between the electrode assembly and the first protrusion.
When the cylindrical battery is subjected to an external force, the end cover assembly can press against the electrode assembly through the first insulating portion, reducing the amplitude of movement of the electrode assembly in the axial direction, and the first protrusion can press against the electrode assembly through the second insulating portion, reducing the amplitude of movement of the electrode assembly in the axial direction, thereby helping to reduce the risk of damage to the electrode assembly and the risk of short circuits, and improving the vibration resistance and drop resistance of the cylindrical battery. By providing the first insulating portion with a larger thickness, a distance between the end cover assembly and the electrode assembly can be increased, providing space for other components of the cylindrical battery. By providing the first insulating portion and the second insulating portion with different thicknesses, a portion of the first insulating portion can be arranged at an inner side of the first protrusion, reducing the risk of short circuits due to contact between the first protrusion and other conductive components.
In the above one or more optional embodiments, the electrode assembly has a first end face at one end facing the end cover assembly. The first end face includes a first region and a second region, where a projection of the first region in the axial direction overlaps with a projection of the first insulating portion in the axial direction, a projection of the second region in the axial direction is located within a projection of the first protrusion in the axial direction, and the projection of the second region in the axial direction is located within a projection of the second insulating portion in the axial direction. In the axial direction, at least a portion of the first region extends beyond the second region, which helps to reduce the amplitude of movement of the electrode assembly in the axial direction when the cylindrical battery is subjected to an external force, improving the vibration resistance and drop resistance of the cylindrical battery.
In the above one or more optional embodiments, in the axial direction, the first region entirely extends beyond the second region, further reducing the amplitude of movement of the electrode assembly in the axial direction when the cylindrical battery is subjected to an external force, thereby improving the vibration resistance and drop resistance of the cylindrical battery.
In the above one or more optional embodiments, in the axial direction, a difference S1 between an average height of the first region and an average height of the second region is 0.1 mm to 0.5 mm.
Setting S1 to be greater than or equal to 0.1 mm allows the second region to be pressed down to a higher extent and increases the pressure applied to the second region, reducing the risk of movement of the electrode assembly due to excessively small local pressure. The second region is close to the periphery of the electrode assembly, the first protrusion is less likely to deform, and the first protrusion can apply a large pressure to the second region, thereby improving the stability of the electrode assembly and improving the vibration resistance and drop resistance of the cylindrical battery. Setting S1 to be less than or equal to 0.5 mm can limit a maximum difference in force applied to different regions of the first end face, reducing the risk of damage caused by pressure to the electrode assembly due to excessively large local pressure.

In the above one or more optional embodiments, the cylindrical battery further includes a current collecting disc. The current collecting disc is disposed between the end cover assembly and the electrode assembly. The current collecting disc includes a first connecting portion, a second connecting portion, and a first bent portion, where the first connecting portion is disposed on the first end face and connected to the electrode assembly, a portion of the first connecting portion is disposed between the first insulating portion and the first end face, the second connecting portion is located between the end cover assembly and the first connecting portion, the second connecting portion is connected to the end cover assembly, and the first bent portion connects the first connecting portion and the second connecting portion. The first insulating portion surrounds the second connecting portion.

The current collecting disc is bent, helping to simplify the assembly of the cylindrical battery. The second connecting portion can be disposed within a space enclosed by the first insulating portion, thereby improving space utilization. The first insulating portion can separate the first protrusion from the second connecting portion, reducing the risk of short circuits.

In the above one or more optional embodiments, the first end face includes a third region, where a projection of the third region in the axial direction overlaps with a projection of the second connecting portion in the axial direction. In the axial direction, at least a portion of the third region extends beyond the first region.

During assembly, the end cover assembly applies pressure to the first end face through the second connecting portion, the first bent portion, and the first connecting portion, causing a region of the first end face pressed by the first connecting portion to move toward the bottom wall, where a distance by which the first region moves toward the bottom wall is greater than a distance by which the third region moves toward the bottom wall. After assembly, in the axial direction, at least a portion of the third region extends beyond the first region. After assembly, the pressure applied to the third region is relatively small, and correspondingly, a reaction force exerted by the third region on the current collecting disc is also relatively small. The second connecting portion is connected to a central portion of the end cover assembly. In these embodiments of this application, by reducing the reaction force exerted by the third region on the current collecting disc, the risk of damage to the current collecting disc can be reduced, and the force transmitted to the end cover assembly can be reduced, thereby reducing deformation of the end cover assembly.

In the above one or more optional embodiments, in the axial direction, the third region entirely extends beyond the second region. A difference between an average height of the third region in the axial direction and an average height of the second region in the axial direction is greater than a thickness of the first connecting portion.

Compared to the third region, the second region is pressed down by at least the thickness of the first connecting portion, thereby increasing the pressure applied to the second region. The second region is close to the periphery of the electrode assembly, and applying a large pressure to the second region can improve the stability of the electrode assembly, thereby improving the vibration resistance and drop resistance of the cylindrical battery.

In the above one or more optional embodiments, the first insulating portion is annular, and the second insulating portion is annular and surrounds an outer side of the first insulating portion.

The provision of the annular first insulating portion and the annular second insulating portion helps to increase an area of the electrode assembly subjected to pressure, improving the stability of the electrode assembly, thereby improving the vibration resistance and drop resistance of the cylindrical battery.

In the above one or more optional embodiments, the first insulating portion includes an inner annular surface and an outer annular surface opposite each other in the radial direction; the first insulating portion is provided with a channel; two ends of the channel extend to the inner annular surface and the outer annular surface, respectively; a first space is formed between the second insulating portion and the end cover assembly; the first insulating portion encloses a second space; and the first space communicates with the second space through the channel.

During production and use of the cylindrical battery, gas generated by the electrode assembly can flow into the first space through the second space and the channel. By providing the channel, the first space can be utilized to accommodate gas, thereby reducing an internal pressure of the cylindrical battery, improving the cycling performance of the cylindrical battery, and reducing the risk of failure of the cylindrical battery.

In the above one or more optional embodiments, the channel includes a recess, where the recess is recessed from a surface of the first insulating portion facing the end cover assembly.

The recess is easy to form, and using the recess to guide gas flow helps to simplify the structure and forming process of the insulating member. An upper side of the recess is the end cover assembly, the end cover assembly has high strength, and when the end cover assembly and the first insulating portion press against each other, the end cover assembly is less likely to fill the recess. Using the recess to form the channel can reduce the risk of the channel being filled or sealed.

In the above one or more optional embodiments, in the axial direction, a depth of the recess is h1. In the axial direction, a height by which the first insulating portion protrudes beyond the second insulating portion is h2. $0.1 \leq h1/h2 \leq 1$.

In these embodiments of this application, setting h1/h2 to be greater than or equal to 0.1 can increase a cross-sectional area of the recess, improving gas guide efficiency and reducing the risk of the recess being sealed or failure of the recess. Setting h1/h2 to be less than or equal to 1 can reduce the impact of formation of the recess on the strength of the first insulating portion.

In the above one or more optional embodiments, there are multiple channels, and the multiple channels are circumferentially spaced apart along the first insulating portion. By providing multiple channels, gas guide efficiency can be improved, reducing the risk of channel failure.

In the above one or more optional embodiments, a thickness of the first insulating portion is H1, and a thickness of the second insulating portion is H2. $1.1 \leq H1/H2 \leq 5$.

In these embodiments of this application, H1/H2 is set to be greater than or equal to 1.1 to allow the second insulating portion to have a smaller thickness or the first insulating portion to have a larger thickness. The first protrusion presses against the electrode assembly through the second insulating portion, and the electrode assembly deforms when pressed; and the second insulating portion with a smaller thickness can adapt to the deformation of the electrode assembly, improving the stability of the electrode assembly. The first insulating portion with a larger thickness can increase a distance between the end cover assembly and the electrode assembly, providing space for other components of the cylindrical battery. In these embodiments of this application, H1/H2 is set to be less than or equal to 5 to reduce the impact of the provision of the insulating member on the energy density of the cylindrical battery.

In the above one or more optional embodiments, in the radial direction, a gap is provided between the first insulating portion and the first protrusion. The provision of the gap can reduce the risk of the first protrusion pressing against the first insulating portion in the radial direction during formation of the first protrusion, reducing misalignment of the insulating member in the radial direction. The gap can also accommodate gas, thereby reducing the internal pressure of the cylindrical battery.

In the above one or more optional embodiments, a diameter of an inner cavity enclosed by the sidewall body is D1. The second insulating portion is circular, and an outer diameter of the second insulating portion is D2. In the radial direction, a height by which the first protrusion protrudes beyond the sidewall body is h3. $0 < D1 - D2 < h3$.

In these embodiments of this application, D1 - D2 is set to be greater than 0 to reduce friction between the insulating member and the sidewall during installation of the insulating member into the housing, thereby lowering the installation difficulty. In these embodiments of this application, setting D1 - D2 to be less than h3 can ensure that, when the second insulating portion and the sidewall body are not coaxial due to assembly errors, the first protrusion can press against the periphery of the second insulating portion, improving the stability of the insulating member and the stability of the electrode assembly.

In the above one or more optional embodiments, the end cover assembly includes an end cover and an explosion-proof sheet disposed on the end cover. A side of the end cover facing the electrode assembly is provided with a second protrusion. In the axial direction, at least a portion of the first insulating portion is located between the electrode assembly and the second protrusion.

By providing the second protrusion, the size requirement for the first insulating portion in the axial direction can be reduced. The provision of the second protrusion can also increase the strength of a region of the end cover close to the first insulating portion, thereby reducing the amplitude of movement of the electrode assembly in the axial direction and improving the vibration resistance and drop resistance of the cylindrical battery.

In the above one or more optional embodiments, a diameter of the cylindrical battery is 30 mm to 70 mm.

The cylindrical battery of these embodiments of this application has a large diameter. Large-diameter cylindrical batteries offer advantages such as high energy density and good structural stability. When the cylindrical battery is subjected to an external force and vibrates, both the end cover assembly and the first protrusion can press against the electrode assembly through the insulating member, reducing the amplitude of movement of the electrode assembly with a large diameter in the axial direction. By providing the insulating member, the vibration resistance and drop resistance of the large-diameter cylindrical battery can be improved.

According to a second aspect, an embodiment of this application further provides a battery module including multiple cylindrical batteries provided in any embodiment according to the first aspect.

According to a third aspect, an embodiment of this application further provides an electric device including multiple cylindrical batteries provided in any embodiment according to the first aspect.

**BRIEF DESCRIPTION OF DRAWINGS**

The features, advantages, and technical effects of exemplary embodiments of this application will be described below with reference to the accompanying drawings.

FIG. 1 is a schematic structural diagram of a cylindrical battery according to some embodiments of this application;

FIG. 2 is a schematic exploded view of the cylindrical battery shown in FIG. 1;

FIG. 3 is a schematic cross-sectional view of the cylindrical battery shown in FIG. 1;

FIG. 4 is a schematic enlarged view at a square box in FIG. 3;

FIG. 5 is a schematic enlarged view at a circular box in FIG. 4;

FIG. 6 is a partial schematic cross-sectional view of the cylindrical battery shown in FIG. 1;

FIG. 7 is a schematic diagram of an insulating member of a cylindrical battery according to some embodiments of this application;

FIG. 8 is a cross-sectional view of FIG. 7 along an A-A direction;

FIG. 9 is a schematic enlarged view at a circular box in FIG. 8;

FIG. 10 is a schematic diagram of a battery module according to some embodiments of this application; and

FIG. 11 is a schematic diagram of an electric device according to some embodiments of this application.

Reference signs in specific embodiments are as follows:

| | |
|---|---|
| 1. electrode assembly; | 52. second connecting portion; |
| 11. first end face; | 53. first bent portion; |
| 111. first region; | 54. third connecting portion; |
| 112. second region; | 55. second bent portion; |
| 113. third region; | 6. insulating member; |
| 12. center hole; | 61. first insulating portion; |
| 2. housing; | 611. inner annular surface; |
| 21. bottom wall; | 612. outer annular surface; |
| 22. sidewall; | 613. channel; |
| 221. sidewall body; | 613a. recess; |
| 222. first protrusion; | 62. second insulating portion; |
| 223. fixing portion; | 7. insulating tape; |
| 224. sidewall recess; | 1000. cylindrical battery; |
| 3. end cover assembly; | 2000. case; |
| 31. end cover; | 3000. battery module; |
| 311. second protrusion; | 4000. electric device; |
| 312. end cover recess; | G. gap; |
| 32. explosion-proof sheet; | C1. first space; |
| 33. orifice plate; | C2. second space; |
| 34. insulating structure; | L. axis; and |
| 5. current collecting disc; | Z, axial direction. |
| 51. first connecting portion; | |

## DESCRIPTION

To make the objectives, technical solutions, and advantages of some embodiments of this application clearer, the technical solutions in some embodiments of this application will be described clearly below with reference to the accompanying drawings in some embodiments of this application. Apparently, the described embodiments are some embodiments rather than all embodiments of this application.

The terms "first", "second", "third", and the like in the specification and claims of this application or in the above drawings are used to distinguish different objects rather than to describe a specific order or primary and secondary relationship. In some embodiments of this application, identical reference signs indicate identical components, and for brevity, detailed descriptions of identical components are omitted in different embodiments.

References to "embodiment" in this application mean that a specific feature, structure, or characteristic described in connection with this embodiment may be included in at least one embodiment of this application. The appearance of this phrase in various places in the specification does not necessarily refer to the same embodiment, nor is it an independent or alternative embodiment mutually exclusive with other embodiments.

In the description of this application, unless otherwise expressly specified and limited, terms such as "mounting" and "connection" should be understood broadly. For example, they may refer to a fixed connection, a detachable connection, or an integral connection; they may refer to a direct connection, an indirect connection through an intermediate medium, or an internal communication between two elements. For those of ordinary skill in the art, the specific meanings of the above terms in this application can be understood based on specific circumstances.

In some embodiments of this application, "parallel" includes not only absolute parallelism but also approximate parallelism as conventionally understood in engineering. Similarly, "perpendicular" includes not only absolute perpendicularity but also approximate perpendicularity as conventionally understood in engineering. For example, if an included angle between two directions is 80° to 90°, the two directions can be considered to be perpendicular. If an included angle between two directions is 0° to 10°, the two directions can be considered to be parallel.

The cylindrical battery, battery module, and electric device of this application are described below with reference to the accompanying drawings.

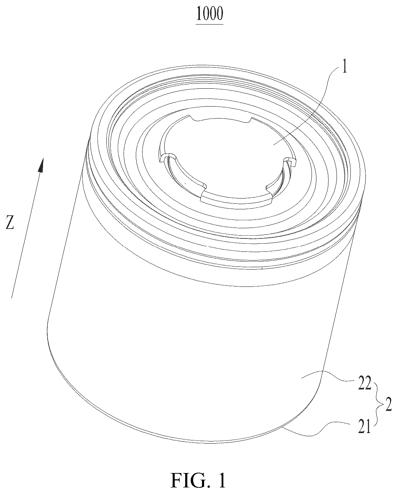

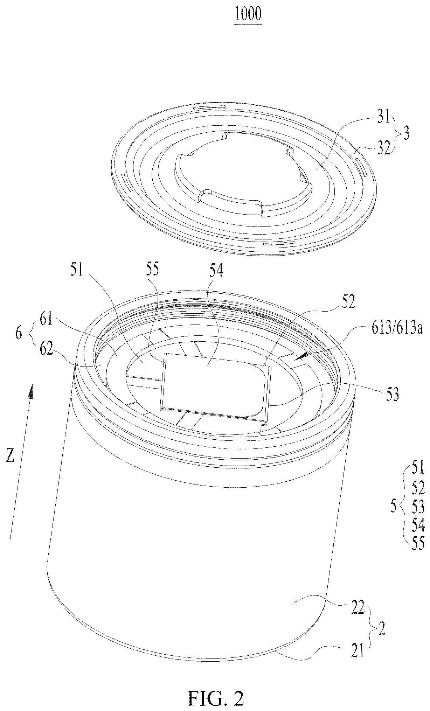

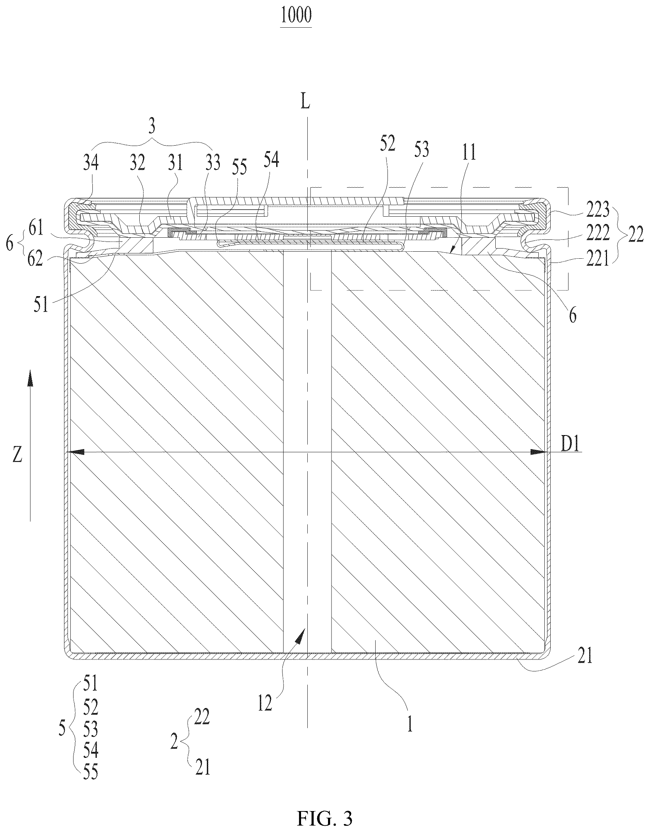

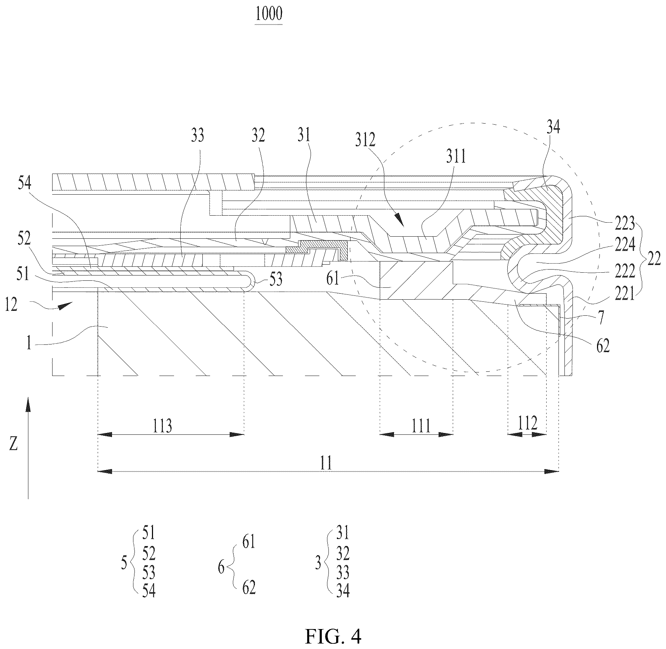

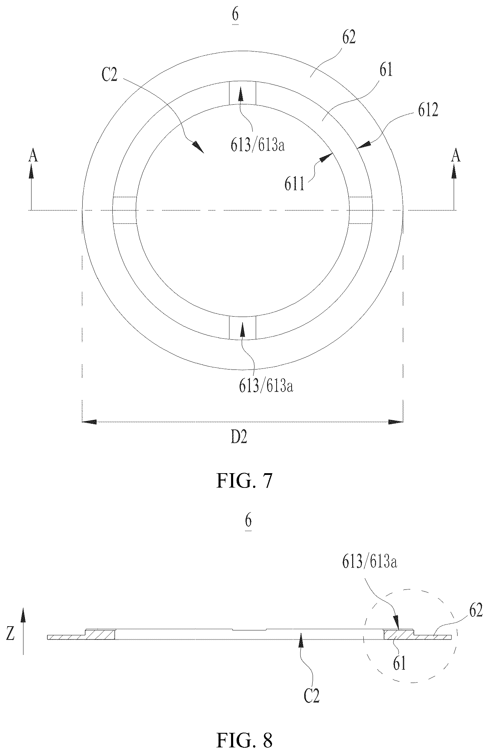

Referring to FIG. 1 to FIG. 9, an embodiment of this application provides a cylindrical battery 1000.

The cylindrical battery 1000 may be, but is not limited to, a lithium-ion battery, a sodium-lithium-ion battery, a sodium-ion battery, or a magnesium-ion battery.

The cylindrical battery 1000 may be a 21700 battery, an 18650 battery, a 46800 battery, a 49480 battery, or another model of cylindrical battery 1000.

In some embodiments, the cylindrical battery 1000 is a secondary battery. A secondary battery can be recharged to activate its active material for continued use after discharge.

In some embodiments, the cylindrical battery 1000 includes a housing 2 and an electrode assembly 1 accommodated within the housing 2.

In some embodiments, the electrode assembly 1 includes a first electrode plate and a second electrode plate with opposite polarities. During the charging and discharging processes of the cylindrical battery 1000, active ions (for example, lithium ions) intercalate and deintercalate back and forth between the first electrode plate and the second electrode plate. One of the first electrode plate and the second electrode plate is a positive electrode plate, and the other is a negative electrode plate.

In some embodiments, the electrode assembly 1 includes a separator disposed between the first electrode plate and the second electrode plate, and the separator insulates the first electrode plate from the second electrode plate. The separator can reduce the risk of short circuits between the positive and negative electrode plates while allowing active ions to pass through.

In some embodiments, the first electrode plate, the separator, and the second electrode plate are wound.

In some embodiments, the first electrode plate includes a first current collector and a first active material layer, and the first current collector includes a first coated region coated with the first active material layer and a first uncoated foil region not coated with the first active material layer. The first coated region and the first uncoated foil region may be arranged in an axial direction Z of the cylindrical battery 1000.

In some embodiments, the first uncoated foil region is wound into multiple turns.

In some embodiments, the first electrode plate includes a first tab. The first tab may be formed by flattening or smoothing the first uncoated foil region. For example, the first uncoated foil region may be pressed from the outside to the inside in a radial direction of the electrode assembly 1, and an end portion of the first uncoated foil region away from the first coated region is bent to form the first tab.

In some other embodiments, the first tab may be formed by flattening the first uncoated foil region. For example, the first uncoated foil region may be pressed in an axial direction of the electrode assembly 1 from a side of the first uncoated foil region away from the first coated region, and the end portion of the first uncoated foil region away from the first coated region is bent to form the first tab.

In some embodiments, the second electrode plate includes a second current collector and a second active material layer, and the second current collector includes a second coated region coated with the second active material layer and a second uncoated foil region not coated with the second active material layer. The second coated region and the second uncoated foil region may be arranged in the axial direction Z of the cylindrical battery 1000.

In some embodiments, the second uncoated foil region is wound into multiple turns.

In some embodiments, the second electrode plate includes a second tab, and the second tab may be formed by flattening or smoothing the second uncoated foil region. For example, the second uncoated foil region may be pressed from the outside to the inside in the radial direction of the electrode assembly 1, and an end portion of the second uncoated foil region away from the second coated region is bent to form the second tab.

In some other embodiments, the second tab may be formed by flattening the second uncoated foil region. For example, the second uncoated foil region may be pressed in the axial direction of the electrode assembly 1 from a side of the second uncoated foil region away from the second coated region, and the end portion of the second uncoated foil region away from the second coated region is bent to form the second tab.

In some embodiments, in the axial direction Z of the cylindrical battery 1000, the first tab and the second tab are located at two ends of the electrode assembly 1.

In some embodiments, one end of the housing 2 in the axial direction Z is provided with an opening.

In some embodiments, the housing 2 includes a bottom wall 21 and a sidewall 22, and the sidewall 22 is connected to the bottom wall 21 and surrounds the electrode assembly 1. An end of the sidewall 22 in the axial direction Z away from the bottom wall 21 is provided with an opening.

The bottom wall 21 and the sidewall 22 may be integrally formed. Alternatively, the bottom wall 21 and the sidewall 22 may be separately formed and connected by welding or other means.

In some embodiments, the cylindrical battery 1000 includes an end cover assembly 3, and the end cover assembly 3 is connected to the housing 2 and covers the opening of the housing 2. The end cover assembly 3 can seal the opening of the housing 2, forming a relatively enclosed accommodating space between the housing 2 and the end cover assembly 3, and the accommodating space can accommodate components such as the electrode assembly 1 and an electrolyte.

In some embodiments, the bottom wall 21 and the end cover assembly 3 are arranged in the axial direction Z of the cylindrical battery 1000. The end cover assembly 3 and the bottom wall 21 are located on two sides of the electrode assembly 1, respectively.

In some embodiments, the end cover assembly 3 is connected to the sidewall 22 in an insulated manner.

In some embodiments, the end cover assembly 3 includes an end cover 31, and the end cover 31 is connected to the sidewall 22 in an insulated manner.

In some embodiments, the housing 2 and the end cover 31 may be made of steel, aluminum, composite metal, or other conductive materials. The materials of the housing 2 and the end cover 31 may be the same or different.

In some embodiments, the first tab is connected to the end cover 31, and the second tab is connected to the bottom wall 21.

In some embodiments, the end cover assembly 3 includes an insulating structure 34, and the insulating structure 34 is disposed between the end cover 31 and the sidewall 22. For example, the insulating structure 34 may be insulating rubber or ceramic.

In some embodiments, the cylindrical battery 1000 includes a current collecting disc 5, the current collecting disc 5 is disposed between the end cover assembly 3 and the electrode assembly 1, and the current collecting disc 5 is connected to the end cover assembly 3 and the electrode assembly 1.

In some embodiments, the current collecting disc 5 is connected to the first tab and the end cover 31. By providing the current collecting disc 5, electrical connection between the end cover 31 and the electrode assembly 1 can be achieved, which helps to increase a current-carrying capacity and simplify the assembly process of the cylindrical battery 1000.

In some embodiments, the current collecting disc 5 is welded to the first tab.

In some embodiments, the end cover assembly 3 further includes an explosion-proof sheet 32, and the explosion-proof sheet 32 is disposed on the end cover 31.

When an internal pressure of the cylindrical battery 1000 exceeds an upper limit that the explosion-proof sheet 32 can withstand, the internal pressure of the cylindrical battery 1000 can cause the explosion-proof sheet 32 to flip and rupture away from the electrode assembly 1, thereby achieving power disconnection and pressure relief, helping to reduce the risk of explosion of the cylindrical battery 1000 due to an excessive internal pressure, thereby improving the safety performance of the cylindrical battery 1000.

In some embodiments, the explosion-proof sheet 32 may be connected to the end cover 31 by welding, riveting, bonding, or other suitable means.

In some embodiments, at least a portion of the explosion-proof sheet 32 is located between the end cover 31 and the electrode assembly 1.

In some embodiments, the explosion-proof sheet 32 connects the current collecting disc 5 and the end cover 31.

In some embodiments, a portion of the explosion-proof sheet 32 is located between the end cover 31 and the electrode assembly 1, and another portion of the explosion-proof sheet 32 is bent toward an outer side of the end cover 31 away from the electrode assembly 1 to cover an edge of the end cover 31. Optionally, the insulating structure 34 is disposed between the explosion-proof sheet 32 and the sidewall 22.

In some embodiments, the end cover assembly 3 includes an orifice plate 33, and the orifice plate 33 is disposed between the current collecting disc 5 and the explosion-proof sheet 32. The orifice plate 33 is connected to the current collecting disc 5 and the explosion-proof sheet 32, so that the current collecting disc 5 and the explosion-proof sheet 32 can be electrically connected through the orifice plate 33. The end cover 31 is electrically connected to the first tab sequentially through the explosion-proof sheet 32, the orifice plate 33, and the current collecting disc 5.

In some embodiments, the orifice plate 33 may be provided with an opening, and the opening of the orifice plate 33 can serve as a channel for gas flow, to allow gas inside the cylindrical battery 1000 to act on the explosion-proof sheet 32 through the opening, enabling the explosion-proof sheet 32 to flip when the internal pressure of the cylindrical battery 1000 is excessively large, thereby breaking the electrical connection between the explosion-proof sheet 32 and the orifice plate 33 and reducing safety risks. When the explosion-proof sheet 32 flips, a portion of the explosion-proof sheet 32 provided with an indentation ruptures to form a channel, and gas inside the cylindrical battery 1000 is discharged to the outside through the channel, reducing safety risks.

In some embodiments, the sidewall 22 includes a sidewall body 221 and a first protrusion 222, the sidewall body 221 is connected to the bottom wall 21, and the first protrusion 222 protrudes from an inner surface of the sidewall body 221.

For example, the first protrusion 222 and the bottom wall 21 are connected to two ends of the sidewall body 221, respectively.

For example, the first protrusion 222 extends one circle along the circumference of the cylindrical battery 1000.

For example, the first protrusion 222 may be a solid structure or a hollow structure.

In some embodiments, in the axial direction Z, at least a portion of the first protrusion 222 is located between the electrode assembly 1 and the end cover assembly 3. In some examples, in the axial direction Z, a portion of the first protrusion 222 is disposed between the electrode assembly 1 and the end cover assembly 3; and in some other examples, in the axial direction Z, the entire first protrusion 222 is disposed between the electrode assembly 1 and the end cover assembly 3.

In some embodiments, the sidewall 22 further includes a fixing portion 223, and the first protrusion 222 connects the fixing portion 223 and the sidewall body 221.

In some examples, the fixing portion 223 surrounds the end cover 31. A portion of the fixing portion 223 is bent to a side of the end cover 31 away from the first protrusion 222. In the axial direction Z, a portion of the end cover 31 is located between the first protrusion 222 and the fixing portion 223.

In some embodiments, an outer side of the sidewall 22 is provided with a sidewall recess 224, and the sidewall recess 224 corresponds to the first protrusion 222 in position.

In some embodiments, the cylindrical battery 1000 includes an insulating member 6. In the axial direction Z, a portion of the insulating member 6 is located between the electrode assembly 1 and the first protrusion 222.

The insulating member 6 can separate the first protrusion 222 from the electrode assembly 1, reducing the risk of short circuits due to contact between the first protrusion 222 and the electrode assembly 1. When the cylindrical battery 1000 is subjected to an external force, the insulating member 6 can reduce the amplitude of movement of the electrode assembly 1 in the axial direction Z, reducing the risk of damage to the electrode assembly 1, and improving the vibration resistance and drop resistance of the cylindrical battery 1000.

In some embodiments, the insulating member 6 includes a first insulating portion 61 and a second insulating portion 62, where a thickness of the first insulating portion 61 is greater than a thickness of the second insulating portion 62.

In a radial direction of the cylindrical battery 1000, at least a portion of the first insulating portion 61 is located at an inner side of the first protrusion 222. For example, in a projection plane perpendicular to the axial direction Z, an orthographic projection of the first protrusion 222 surrounds an outer side of an orthographic projection of the first insulating portion 61.

In the axial direction Z, at least a portion of the first insulating portion 61 is located between the electrode assembly 1 and the end cover assembly 3, and at least a portion of the second insulating portion 62 is located between the electrode assembly 1 and the first protrusion 222.

The electrode assembly 1 and the end cover assembly 3 apply pressure to the first insulating portion 61 from two sides, such that at least a portion of the first insulating portion 61 is located in the axial direction Z between the electrode assembly 1 and the end cover assembly 3.

The electrode assembly 1 may be in direct contact with the first insulating portion 61 and directly apply pressure to the first insulating portion 61. Alternatively, another component may also be located between the electrode assembly 1 and the first insulating portion 61, and the electrode assembly 1 applies pressure to the first insulating portion 61 through this component.

The end cover assembly 3 may be in direct contact with the first insulating portion 61 and directly apply pressure to the first insulating portion 61. Alternatively, another component may also be located between the end cover assembly 3 and the first insulating portion 61, and the end cover assembly 3 applies pressure to the first insulating portion 61 through this component.

The electrode assembly 1 and the first protrusion 222 apply pressure to the second insulating portion 62 from two sides, such that at least a portion of the second insulating portion 62 is located in the axial direction Z between the electrode assembly 1 and the first protrusion 222.

The electrode assembly 1 may be in direct contact with the second insulating portion 62 and directly apply pressure to the second insulating portion 62. Alternatively, another component may also be located between the electrode assembly 1 and the second insulating portion 62, and the electrode assembly 1 applies pressure to the second insulating portion 62 through this component.

The first protrusion 222 may be in direct contact with the second insulating portion 62 and directly apply pressure to the second insulating portion 62. Alternatively, another component may also be located between the first protrusion 222 and the second insulating portion 62, and the first protrusion 222 applies pressure to the second insulating portion 62 through this component.

The first insulating portion 61 can separate at least a portion of the end cover assembly 3 from the electrode assembly 1 to reduce the risk of short circuits due to direct contact between the end cover assembly 3 and the electrode assembly 1 (for example, the end cover assembly 3 is connected to the first tab, and if the end cover assembly 3 comes into contact with a second electrode plate, a short circuit risk is caused). The second insulating portion 62 can separate at least a portion of the first protrusion 222 from the electrode assembly 1 to reduce the risk of short circuits due to direct contact between the first protrusion 222 and the electrode assembly 1 (for example, the bottom wall 21 is connected to the second tab, and if the first protrusion comes into contact with a first electrode plate, a short circuit risk is caused).

When the cylindrical battery 1000 is subjected to an external force, the end cover assembly 3 can press against the electrode assembly 1 through the first insulating portion 61, reducing the amplitude of movement of the electrode assembly 1 in the axial direction Z, and the first protrusion 222 can press against the electrode assembly 1 through the second insulating portion 62, reducing the amplitude of movement of the electrode assembly 1 in the axial direction Z, thereby helping to reduce the risk of damage to the electrode assembly 1 and the risk of short circuits, and improving the vibration resistance and drop resistance of the cylindrical battery 1000. By providing the first insulating portion 61 with a larger thickness, a distance between the end cover assembly 3 and the electrode assembly 1 can be increased, providing space for other components of the cylindrical battery 1000. By providing the first insulating portion 61 and the second insulating portion 62 with different thicknesses, a portion of the first insulating portion 61 can be arranged at an inner side of the first protrusion 222, reducing the risk of short circuits due to contact between the first protrusion 222 and other conductive components.

In some embodiments, after the electrode assembly 1 and the insulating member 6 are installed in the housing 2, the sidewall 22 may be rolled from the outer side to form the sidewall recess 224 and the inwardly protruding first protrusion 222.

In some embodiments, the electrode assembly 1 has a first end face 11 at one end facing the end cover assembly 3.

For example, the first end face 11 may be a surface of the first tab facing the end cover 31. The first end face 11 may be formed through a flattening or smoothing process.

In some embodiments, the electrode assembly 1 has a second end face (not shown in the figure) at an end facing the bottom wall 21.

For example, the second end face may be a surface of the second tab facing the bottom wall 21. The second end face may be formed through a flattening or smoothing process.

In some embodiments, a projection of the first end face 11 in the axial direction Z may be annular.

In some embodiments, the first end face 11 includes a first region 111, where a projection of the first region 111 in the axial direction Z overlaps with a projection of the first insulating portion 61 in the axial direction Z.

For example, the end cover assembly 3 may press against the first region 111 through the first insulating portion 61.

In some embodiments, the first region 111 is annular.

In some embodiments, the first end face 11 includes a second region 112, where a projection of the second region 112 in the axial direction Z is located within a projection of the first protrusion 222 in the axial direction Z, and the projection of the second region 112 in the axial direction Z is located within a projection of the second insulating portion 62 in the axial direction Z.

For example, the first protrusion 222 may press against the second region 112 through the second insulating portion 62.

For example, during rolling formation of the first protrusion 222, the first protrusion 222 gradually presses against the second insulating portion 62, causing the second region 112 to move toward the bottom wall 21.

In some embodiments, the second region 112 is annular.

In some embodiments, in the axial direction Z, at least a portion of the first region 111 extends beyond the second region 112, which helps to reduce the amplitude of movement of the electrode assembly 1 in the axial direction Z when the cylindrical battery 1000 is subjected to an external force, improving the vibration resistance and drop resistance of the cylindrical battery 1000.

In some embodiments, the cylindrical battery 1000 further includes an insulating tape 7, and the insulating tape 7 surrounds the first tab.

In some embodiments, a portion of the insulating tape 7 is folded onto the first end face 11 and adhered to the first end face 11.

In some embodiments, in the axial direction Z, a portion of the insulating tape 7 is located between the first end face 11 and the second insulating portion 62.

In some embodiments, in the axial direction Z, the electrode assembly 1, the first insulating portion 61, and the end cover assembly 3 are in interference fit; and the electrode assembly 1, the second insulating portion 62, and the first protrusion 222 are in interference fit. The interference fit can improve the stability of the electrode assembly 1, thereby improving the vibration resistance and drop resistance of the cylindrical battery 1000.

In some embodiments, a magnitude of the interference fit between the electrode assembly 1, the second

EP 4 723 316 A2

insulating portion 62, and the first protrusion 222 during assembly is greater than a magnitude of the interference fit between the electrode assembly 1, the first insulating portion 61, and the end cover assembly 3 during assembly.

During assembly, a region of the first end face 11 pressed by the insulating member 6 moves toward the bottom wall 21. Due to the difference in the magnitude of the interference fit, a distance by which the second region 112 moves toward the bottom wall 21 is greater than a distance by which the first region 111 moves toward the bottom wall 21. After assembly, in the axial direction Z, at least a portion of the first region 111 extends beyond the second region 112.

After assembly, pressure applied to the second region 112 is greater than pressure applied to the first region 111. The second region 112 is close to the periphery of the electrode assembly 1, and the first protrusion 222 is less likely to deform, allowing the first protrusion 222 to apply a large pressure to the second region 112, thereby improving the stability of the electrode assembly 1 and improving the vibration resistance and drop resistance of the cylindrical battery 1000.

In some embodiments, in the axial direction Z, the first region 111 entirely extends beyond the second region 112, further reducing the amplitude of movement of the electrode assembly 1 in the axial direction Z when the cylindrical battery 1000 is subjected to an external force, thereby improving the vibration resistance and drop resistance of the cylindrical battery 1000.

In some embodiments, in the axial direction Z, an average height of the second region 112 is less than an average height of the first region 111.

In some embodiments, in the axial direction Z, a difference S1 between the average height of the first region 111 and the average height of the second region 112 is 0.1 mm to 0.5 mm.

For example, S1 may be 0.1 mm, 0.15 mm, 0.2 mm, 0.25 mm, 0.3 mm, 0.35 mm, 0.4 mm, 0.45 mm, or 0.5 mm.

For example, the average height of the first region 111 in the axial direction Z and the average height of the second region 112 in the axial direction Z may be tested as follows.

A cross section of the cylindrical battery 1000 is observed using CT (Zeiss Xradia 620 Versa), where the cross section passes through an axis L of the cylindrical battery 1000.

The first region 111 and the second region 112 on the same side of the axis L are selected, the first region 111 is divided into 10 equal segments in the radial direction to obtain 11 first to-be-tested points, and the second region 112 is divided into 10 equal segments to obtain 11 second to-be-tested points.

A plane where the bottom surface of the bottom wall 21 is located is used as a reference plane.

A distance between each first to-be-tested point and the reference plane in the axial direction Z is measured, and the 11 distances obtained through measurement are averaged to obtain an average value, where the average value may be taken as the average height of the first region 111 in the axial direction Z.

A distance between each second to-be-tested point and the reference plane in the axial direction Z is measured, and the 11 distances obtained through measurement are averaged to obtain an average value, where the average value may be taken as the average height of the second region 112 in the axial direction Z.

Setting S1 to be greater than or equal to 0.1 mm allows the second region 112 to be pressed down to a higher extent and increases the pressure applied to the second region 112, reducing the risk of movement of the electrode assembly 1 due to excessively small local pressure. The second region 112 is close to the periphery of the electrode assembly 1, and the first protrusion 222 is less likely to deform, allowing the first protrusion 222 to apply a large pressure to the second region 112, thereby improving the stability of the electrode assembly 1 and improving the vibration resistance and drop resistance of the cylindrical battery 1000. Setting S1 to be less than or equal to 0.5 mm can limit a maximum difference in force applied to different regions of the first end face 11, reducing the risk of damage to the electrode assembly 1 due to excessively large local pressure.

In some embodiments, the current collecting disc 5 includes a first connecting portion 51, a second connecting portion 52, and a first bent portion 53, where the first connecting portion 51 is disposed on the first end face 11 and connected to the electrode assembly 1, the second connecting portion 52 is located between the end cover assembly 3 and the first connecting portion 51, the second connecting portion 52 is connected to the end cover assembly 3, and the first bent portion 53 connects the first connecting portion 51 and the second connecting portion 52.

The current collecting disc 5 is bent, helping to simplify the assembly of the cylindrical battery 1000.

In some embodiments, the first connecting portion 51 is welded to the first tab.

In some embodiments, the second connecting portion 52 is connected to the orifice plate 33. Optionally, the second connecting portion 52 is welded to the orifice plate 33.

In some embodiments, the current collecting disc 5 further includes a third connecting portion 54 and a second bent portion 55, where the third connecting portion 54 is located between the second connecting portion 52 and the end cover assembly 3, the third connecting portion 54 is connected to the end cover assembly 3, and the second bent portion 55 connects the second connecting portion 52 and the third connecting portion 54.

In some embodiments, the third connecting portion 54 is connected to the orifice plate 33.

In some embodiments, the first bent portion 53 and the second bent portion 55 are connected to two ends of the second connecting portion 52, respectively.

In some embodiments, a portion of the first connecting portion 51 is disposed between the first insulating portion

61 and the first end face 11.

In some examples, the entire first insulating portion 61 presses against the first end face 11 through the first connecting portion 51. In some other examples, a portion of the first insulating portion 61 presses against the first end face 11 through the first connecting portion 51, and another portion of the first insulating portion 61 comes into contact with the first end face 11 and directly presses against the first end face 11.

The first insulating portion 61 and the first end face 11 can clamp the first connecting portion 51 from two sides, which helps to improve the stability of the first connecting portion 51 and reduce relative movement between the first connecting portion 51 and the electrode assembly 1 when the cylindrical battery 1000 is subjected to an external force, thereby reducing the risk of connection failure between the first connecting portion 51 and the electrode assembly 1.

In some embodiments, a portion of the first connecting portion 51 is disposed between the second insulating portion 62 and the first end face 11.

In some examples, the entire second insulating portion 62 presses against the first end face 11 through the first connecting portion 51. In some other examples, a portion of the second insulating portion 62 presses against the first end face 11 through the first connecting portion 51, and another portion of the second insulating portion 62 comes into contact with the first end face 11 and directly presses against the first end face 11.

The second insulating portion 62 and the first end face 11 can clamp the first connecting portion 51 from two sides, which helps to improve the stability of the first connecting portion 51 and reduce relative movement between the first connecting portion 51 and the electrode assembly 1 when the cylindrical battery 1000 is subjected to an external force, thereby reducing the risk of connection failure between the first connecting portion 51 and the electrode assembly 1.

In some embodiments, the first insulating portion 61 surrounds the second connecting portion 52.

The second connecting portion 52 may be disposed within a space enclosed by the first insulating portion 61, thereby improving space utilization. The first insulating portion 61 can separate the first protrusion 222 from the second connecting portion 52, reducing the risk of short circuits.

In some embodiments, the first end face 11 includes a third region 113, where a projection of the third region 113 in the axial direction Z overlaps with a projection of the second connecting portion 52 in the axial direction Z. In the axial direction Z, at least a portion of the third region 113 extends beyond the first region 111.

In some embodiments, in the axial direction Z, the electrode assembly 1, the current collecting disc 5, and the end cover assembly 3 are in interference fit. The interference fit can improve the stability of the electrode assembly 1, thereby improving the vibration resistance and drop resistance of the cylindrical battery 1000.

During assembly, the end cover assembly 3 applies pressure to the first end face 11 through the second connecting portion 52, the first bent portion 53, and the first connecting portion 51, causing a region of the first end face 11 pressed by the first connecting portion 51 to move toward the bottom wall 21, and a distance by which the first region 111 moves toward the bottom wall 21 is greater than a distance by which the third region 113 moves toward the bottom wall 21. After assembly, in the axial direction Z, at least a portion of the third region 113 extends beyond the first region 111.

After assembly, the pressure applied to the third region 113 is small, and correspondingly, a reaction force exerted by the third region 113 on the current collecting disc 5 is also small. The second connecting portion 52 is connected to a central portion of the end cover assembly 3. In these embodiments of this application, by reducing the reaction force exerted by the third region 113 on the current collecting disc 5, the risk of damage to the current collecting disc 5 can be reduced, and the force transmitted to the end cover assembly 3 can be reduced, thereby reducing deformation of the end cover assembly 3.

In some embodiments, in the axial direction Z, the third region 113 entirely extends beyond the second region 112.

In some embodiments, in the axial direction Z, the third region 113 entirely extends beyond the first region 111.

In some embodiments, a difference S2 between an average height of the third region 113 in the axial direction Z and the average height of the second region 112 in the axial direction Z is greater than a thickness of the first connecting portion 51.

For example, the average height of the third region 113 in the axial direction Z may be tested as follows.

A cross section of the cylindrical battery 1000 is observed using CT (Zeiss Xradia 620 Versa), where the cross section passes through an axis L of the cylindrical battery 1000.

The third region 113 on the same side of the axis L as the second region 112 is selected, and the third region 113 is divided into 10 equal segments in the radial direction to obtain 11 third to-be-tested points.

A plane where the bottom surface of the bottom wall 21 is located is used as a reference plane.

A distance between each third test point and the reference plane in the axial direction Z is measured.

The 11 distances obtained through measurement are averaged to obtain an average value, and the average value may be taken as the average height of the third region 113 in the axial direction Z.

Compared to the third region 113, the second region 112 is pressed down by at least the thickness of the first connecting portion 51, which can increase the pressure applied to the second region 112. The second region 112 is close to the periphery of the electrode assembly 1, and applying a large pressure to the second region 112 can improve the stability of the electrode assembly 1, thereby improving the vibration resistance and drop resistance of the cylindrical battery 1000.

In some embodiments, the first insulating portion 61 is annular, and the second insulating portion 62 is annular and surrounds an outer side of the first insulating portion 61.

The provision of the annular first insulating portion 61 and the annular second insulating portion 62 helps to increase an area of the electrode assembly 1 subjected to pressure, improving the stability of the electrode assembly 1, thereby improving the vibration resistance and drop resistance of the cylindrical battery 1000.

In some embodiments, the first insulating portion 61 is arc-shaped. The second insulating portion 62 is annular.

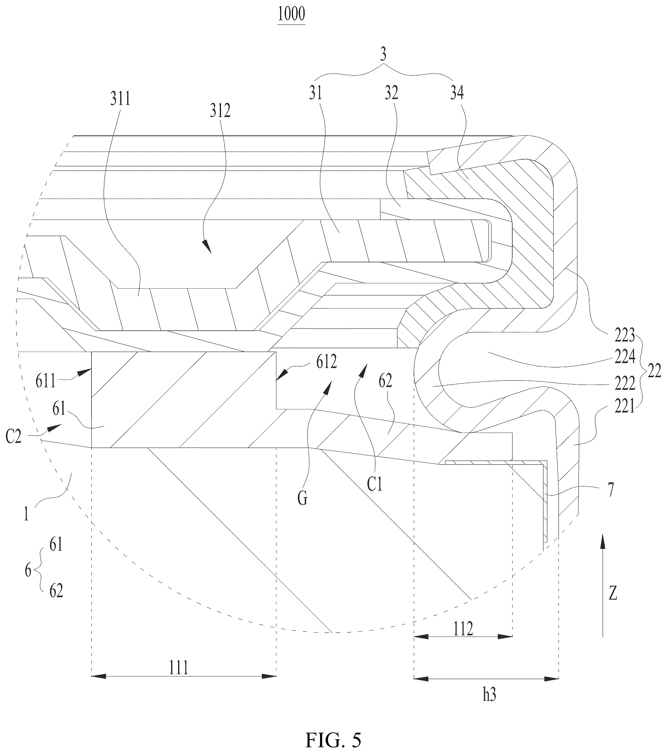

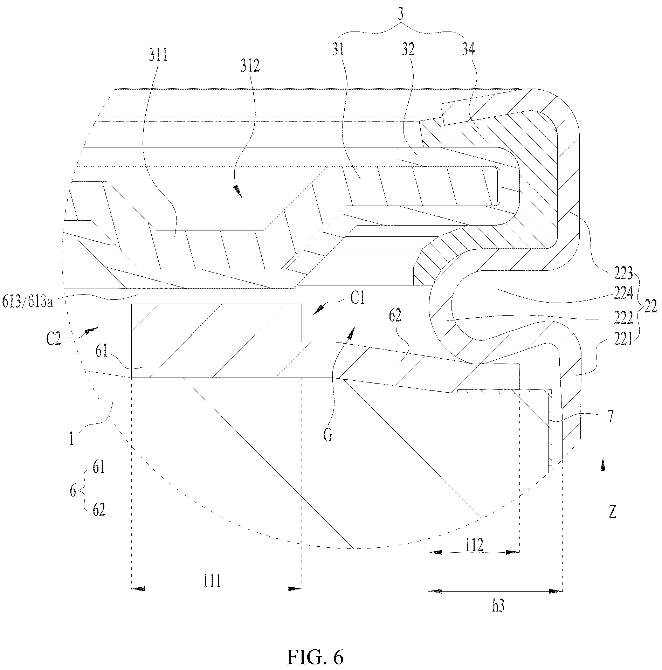

Referring to FIG. 5 and FIG. 6, in some embodiments, the first insulating portion 61 includes an inner annular surface 611 and an outer annular surface 612 opposite each other in the radial direction, the first insulating portion 61 is provided with a channel 613, and two ends of the channel 613 extend to the inner annular surface 611 and the outer annular surface 612, respectively. A first space C1 is formed between the second insulating portion 62 and the end cover assembly 3, the first insulating portion 61 encloses a second space C2, and the first space C1 communicates with the second space C2 through the channel 613. There may be one or more channels 613.

For example, the channel 613 may include at least one of a recess or a hole.

During production and use of the cylindrical battery 1000, gas generated by the electrode assembly 1 can flow into the first space C1 through the second space C2 and the channel 613. By providing the channel 613, the first space C1 can be utilized to accommodate gas, thereby reducing the internal pressure of the cylindrical battery 1000, improving the cycling performance of the cylindrical battery 1000, and reducing the risk of failure of the cylindrical battery 1000.

In some embodiments, the electrode assembly 1 includes a center hole 12, the second space C2 is located on one side of the center hole 12 in the axial direction Z, and the second space C2 communicates with the center hole 12.

In some embodiments, the channel 613 includes a recess 613a, and the recess 613a is recessed from a surface of the first insulating portion 61 facing the end cover assembly 3.

The recess 613a is easy to form, and using the recess 613a to guide gas flow helps to simplify the structure and forming process of the insulating member 6. An upper side of the recess 613a is the end cover assembly 3, the end cover assembly 3 has high strength, and when the end cover assembly 3 and the first insulating portion 61 press against each other, the end cover assembly 3 is less likely to fill the recess 613a. Using the recess 613a to form the channel 613 can reduce the risk of the channel 613 being filled or sealed.

In some embodiments, in the axial direction Z, a depth of the recess 613a is h1. In the axial direction Z, a height by which the first insulating portion 61 protrudes beyond the second insulating portion 62 is h2. $0.1 \leq h1/h2 \leq 1$.

For example, h1/h2 may be 0.1, 0.2, 0.3, 0.4, 0.5, 0.6, 0.7, 0.8, 0.9, or 1.

In these embodiments of this application, setting h1/h2 to be greater than or equal to 0.1 can increase a cross-sectional area of the recess 613a, improving gas guide efficiency and reducing the risk of the recess 613a being sealed or failure of the recess 613a. Setting h1/h2 to be less than or equal to 1 can reduce the impact of formation of the recess 613a on the strength of the first insulating portion 61.

When h1/h2 is set to be greater than 1, the second insulating portion 62 shields the recess 613a, further increasing a depth of the recess 613a, with limited effect on improving gas guide capability. Therefore, in some embodiments of this application, h1/h2 is set to be less than or equal to 1.

In some embodiments, there are multiple channels 613, and the multiple channels 613 are circumferentially spaced apart along the first insulating portion 61.

Shapes of the multiple channels 613 may be the same or different.

Depths of the multiple channels 613 may be the same or different.

The provision of the multiple channels 613 can improve the gas guide efficiency and reduce the risk of failure of the channels 613.

In some embodiments, the multiple channels 613 are circumferentially spaced apart at equal angles along the first insulating portion 61.

In some embodiments, there are four channels 613.

In some embodiments, a thickness of the first insulating portion 61 is H1, and a thickness of the second insulating portion 62 is H2. $1.1 \leq H1/H2 \leq 5$.

For example, H1/H2 may be 1.1, 1.5, 2, 2.5, 3, 3.5, 4, 4.5, or 5.

In these embodiments of this application, H1/H2 is set to be greater than or equal to 1.1 to allow the second insulating portion 62 to have a smaller thickness or the first insulating portion 61 to have a larger thickness. The first protrusion 222 presses against the electrode assembly 1 through the second insulating portion 62, and the electrode assembly 1 deforms when pressed. The second insulating portion 62 with a smaller thickness can adapt to the deformation of the electrode assembly 1, improving the stability of the electrode assembly 1. The first insulating portion 61 with a larger thickness can increase a distance between the end cover assembly 3 and the electrode assembly 1, providing space for other components of the cylindrical battery 1000.

In these embodiments of this application, H1/H2 is set to be less than or equal to 5 to reduce the impact of the provision of the insulating member 6 on the energy density of the cylindrical battery 1000.

In some embodiments, $1.5 \leq H1/H2 \leq 4$. Optionally, $2 \leq H1/H2 \leq 3$.

In some embodiments, in the radial direction, a gap G is provided between the first insulating portion 61 and the first protrusion 222. The provision of the gap G can reduce the risk of the first protrusion 222 pressing against the first insulating portion 61 in the radial direction during formation of the first protrusion 222, reducing misalignment of the insulating member 6 in the radial direction. The gap G can also accommodate gas, thereby reducing the internal pressure of the cylindrical battery 1000.

For example, the gap G forms at least a portion of the first space C1.

In some embodiments, a diameter of an inner cavity enclosed by the sidewall body 221 is D1. The second insulating portion 62 is circular, and an outer diameter of the second insulating portion 62 is D2. In the radial direction, a height by which the first protrusion 222 protrudes beyond the sidewall body 221 is h3. $0 < D1 - D2 < h3$.

For example, D1 - D2 may be $0.1 \times h3$, $0.3 \times h3$, $0.5 \times h3$, $0.7 \times h3$, or $0.9 \times h3$.

In these embodiments of this application, D1 - D2 is set to be greater than 0 to reduce friction between the insulating member 6 and the sidewall 22 during installation of the insulating member 6 into the housing 2, thereby lowering installation difficulty. In these embodiments of this application, setting D1 - D2 to be less than h3 can ensure that, when the second insulating portion 62 and the sidewall body 221 are not coaxial due to assembly errors, the first protrusion 222 can press against the periphery of the second insulating portion 62, improving the stability of the insulating member 6 and the stability of the electrode assembly 1.

In some embodiments, a side of the end cover 31 facing the electrode assembly 1 is provided with a second protrusion 311. In the axial direction Z, at least a portion of the first insulating portion 61 is located between the electrode assembly 1 and the second protrusion 311.

The provision of the second protrusion 311 can reduce the size requirement for the first insulating portion 61 in the axial direction Z. The provision of the second protrusion 311 can also increase the strength of a region of the end cover 31 close to the first insulating portion 61, thereby reducing the amplitude of movement of the electrode assembly 1 in the axial direction Z and improving the vibration resistance and drop resistance of the cylindrical battery 1000.

In some embodiments, a portion of the explosion-proof sheet 32 is located between the second protrusion 311 and the first insulating portion 61.

In some embodiments, a side of the end cover 31 away from the electrode assembly 1 is provided with an end cover recess 312, and the end cover recess 312 corresponds to the second protrusion 311 in position.

In some embodiments, a diameter of the cylindrical battery 1000 is 30 mm to 70 mm.

For example, the diameter of the cylindrical battery 1000 may be 30 mm, 35 mm, 40 mm, 42 mm, 44 mm, 45 mm, 46 mm, 48 mm, 50 mm, 55 mm, 60 mm, 65 mm, or 70 mm.

The cylindrical battery 1000 of these embodiments of this application has a large diameter. Large-diameter cylindrical batteries 1000 offer advantages such as high energy density and good structural stability. When the cylindrical battery 1000 is subjected to external forces and vibrates, both the end cover assembly 3 and the first protrusion 222 can press against the electrode assembly 1 through the insulating member 6, reducing the amplitude of movement of the electrode assembly 1 with a large diameter in the axial direction Z. By providing the insulating member 6, the vibration resistance and drop resistance of the large-diameter cylindrical battery 1000 can be improved.

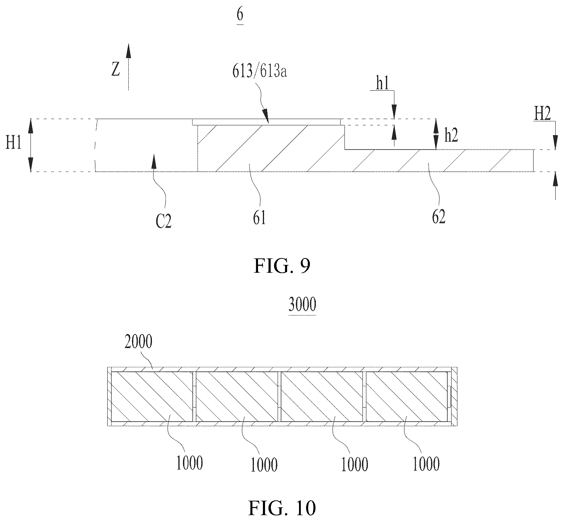

Referring to FIG. 10, an embodiment of this application further provides a battery module 3000, where the battery module 3000 includes multiple cylindrical batteries 1000 provided in any embodiment of this application.

In some embodiments, the battery module 3000 further includes multiple busbars (not shown), and the multiple busbars connect the multiple cylindrical batteries 1000.

In some embodiments, the battery module 3000 further includes a case 2000, and the cylindrical batteries 1000 are accommodated within the case 2000.

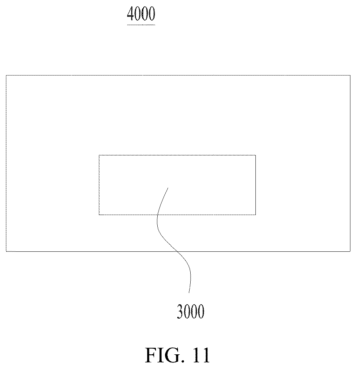

Referring to FIG. 11, an embodiment of this application further provides an electric device 4000, including the cylindrical battery 1000 provided in any embodiment of this application or the battery module 3000 provided in any embodiment of this application.

The electric device 4000 of this embodiment of this application may be a portable device, an electric toy, a drone, an electric tool, an energy storage system, or the like. The electric tool includes electric metal cutting tools, cleaning tools, and the like, such as electric drills, electric wrenches, vacuum cleaners, sweeping robots, and assisted bicycles. This embodiment of this application does not impose specific limitations on the aforementioned electric device.

Although this application has been described with reference to preferred embodiments, various improvements can be made thereto, and components therein can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

**Claims**

1. A cylindrical battery (1000), comprising:

a housing (2) comprising a bottom wall (21) and a sidewall (22), wherein the sidewall (22) comprises a sidewall body (221) and a first protrusion (222), the sidewall body (221) is connected to the bottom wall (21), and the first protrusion (222) protrudes from an inner surface of the sidewall body (221);
an electrode assembly (1), accommodated within the housing (2);
an end cover assembly (3), wherein the bottom wall (21) and the end cover assembly (3) are arranged in an axial direction of the cylindrical battery (1000), the end cover assembly (3) is connected to the sidewall (22) in an insulated manner, and in the axial direction, at least a portion of the first protrusion (222) is located between the electrode assembly (1) and the end cover assembly (3); and
an insulating member (6), comprising a first insulating portion (61) and a second insulating portion (62), wherein a thickness of the first insulating portion (61) is greater than a thickness of the second insulating portion (62); in a radial direction of the cylindrical battery (1000), at least a portion of the first insulating portion (61) is located at an inner side of the first protrusion (222); and in the axial direction, at least a portion of the first insulating portion (61) is located between the electrode assembly (1) and the end cover assembly (3), and at least a portion of the second insulating portion (62) is located between the electrode assembly (1) and the first protrusion (222).

2. The cylindrical battery (1000) according to claim 1, wherein the electrode assembly (1) has a first end face (11) at one end facing the end cover assembly (3); the first end face (11) comprises a first region (111) and a second region (112); a projection of the first region (111) in the axial direction overlaps with a projection of the first insulating portion (61) in the axial direction; a projection of the second region (112) in the axial direction is located within a projection of the first protrusion (222) in the axial direction; the projection of the second region (112) in the axial direction is located within a projection of the second insulating portion (62) in the axial direction; and
in the axial direction, at least a portion of the first region (111) extends beyond the second region (112).

3. The cylindrical battery (1000) according to claim 2, wherein in the axial direction, a difference between an average height of the first region (111) and an average height of the second region (112) is 0.1 mm to 0.5 mm.

4. The cylindrical battery (1000) according to claim 2 or 3, wherein the cylindrical battery (1000) further comprises a current collecting disc (5), and the current collecting disc (5) is disposed between the end cover assembly (3) and the electrode assembly (1);

wherein the current collecting disc (5) comprises a first connecting portion (51), a second connecting portion (52), and a first bent portion (53); the first connecting portion (51) is disposed on the first end face (11) and connected to the electrode assembly (1); a portion of the first connecting portion (51) is disposed between the first insulating portion (61) and the first end face (11); the second connecting portion (52) is located between the end cover assembly (3) and the first connecting portion (51); the second connecting portion (52) is connected to the end cover assembly (3); and the first bent portion (53) connects the first connecting portion (51) and the second connecting portion (52);
the first insulating portion (61) surrounds the second connecting portion (52);
the first end face (11) comprises a third region (113), wherein a projection of the third region (113) in the axial direction overlaps with a projection of the second connecting portion (52) in the axial direction; and
in the axial direction, at least a portion of the third region (113) extends beyond the first region (111).

5. The cylindrical battery (1000) according to claim 4, wherein a difference between an average height of the third region (113) in the axial direction and an average height of the second region (112) in the axial direction is greater than a thickness of the first connecting portion (51).

6. The cylindrical battery (1000) according to any one of claims 1 to 5, wherein the first insulating portion (61) is annular; the second insulating portion (62) is annular and surrounds an outer side of the first insulating portion (61); and wherein the first insulating portion (61) comprises an inner annular surface (611) and an outer annular surface (612) opposite to each other in the radial direction; the first insulating portion (61) is provided with a channel (613), two ends of the channel (613) extend to the inner annular surface (611) and the outer annular surface (612), respectively; a first space (C1) is formed between the second insulating portion (62) and the end cover assembly (3); the first insulating portion (61) encloses a second space (C2); and the first space (C1) communicates with the second space (C2) through the channel (613).

7. The cylindrical battery (1000) according to claim 6, wherein the channel (613) comprises a recess (613a), and the recess (613a) is recessed from a surface of the first insulating portion (61) facing the end cover assembly (3).

8. The cylindrical battery (1000) according to claim 7, wherein in the axial direction, a depth of the recess (613a) is h1; and in the axial direction, a height by which the first insulating portion (61) protrudes beyond the second insulating portion (62) is h2; wherein

$$0.1 \leq h1/h2 \leq 1.$$

9. The cylindrical battery (1000) according to any one of claims 6 to 8, wherein the first insulating portion (61) is provided with multiple channels (613), and the multiple channels (613) are circumferentially spaced apart along the first insulating portion (61).

10. The cylindrical battery (1000) according to any one of claims 1 to 9, wherein a thickness of the first insulating portion (61) is H1, and a thickness of the second insulating portion (62) is H2; wherein

$$1.1 \leq H1/H2 \leq 5.$$

11. The cylindrical battery (1000) according to any one of claims 1 to 10, wherein a diameter of an inner cavity enclosed by the sidewall body (221) is D1;

the second insulating portion (62) is circular, and an outer diameter of the second insulating portion (62) is D2; and in the radial direction, a height by which the first protrusion (222) protrudes beyond the sidewall body (221) is h3; wherein

$$0 < D1 - D2 < h3.$$

12. The cylindrical battery (1000) according to any one of claims 1 to 11, wherein the end cover assembly (3) comprises an end cover (31);

a side of the end cover (31) facing the electrode assembly (1) is provided with a second protrusion (311); and in the axial direction, at least a portion of the first insulating portion (61) is located between the electrode assembly (1) and the second protrusion (311).

13. The cylindrical battery (1000) according to any one of claims 1 to 12, wherein a diameter of the cylindrical battery (1000) is 30 mm to 70 mm.

14. A battery module (3000), comprising multiple cylindrical batteries (1000) according to any one of claims 1 to 13.

15. An electric device (4000), comprising the cylindrical battery (1000) according to any one of claims 1 to 13.

FIG. 1

1000

FIG. 2

1000

FIG. 3

1000

FIG. 4

FIG. 5

FIG. 6

6

62

C2

61

613/613a

612

A

A

611

613/613a

D2

FIG. 7

6

613/613a

62

Z

61

C2

FIG. 8

6

Z

613/613a

h1

H2

H1

h2

C2

61

62

FIG. 9

3000

2000

1000    1000    1000    1000

FIG. 10

4000

3000

FIG. 11